# EUROPEAN PATENT SPECIFICATION

(11) **EP 1 929 708 B1**
(45) Date of publication and mention of the grant of the patent: **03.03.2010**
(21) Application number: 06793931.4
(22) Date of filing: 29.09.2006
(51) Int. Cl.: H04L 12/26

(54) **A DISTRIBUTED MONITORING METHOD**
VERTEILTES ÜBERWACHUNGSVERFAHREN
PROCEDE DE SURVEILLANCE REPARTI

(30) Priority: 30.09.2005 CN 200510107401
(43) Date of publication of application: 11.06.2008
(73) Proprietor: Siemens Schweiz AG, 8047 Zürich (CH)
(72) Inventor: MEINER, Martin, Beijing 101300 (CN)
(74) Representative: Maier, Daniel Oliver
(86) International application number: PCT/EP2006/066918
(87) International publication number: WO 2007/039577

(56) References cited:
- US-A1- 2005 114 577
- MODICON: "modbus protocol reference guide" INTERNET CITATION, [Online] June 1996 (1996-06), XP002167514 Retrieved from the Internet: URL:http://www.modicon.com/techpubs/TechPu bNew/PI_MBUS_300.pdf> [retrieved on 2001-05-16]

## Description

### I. Technical Field

This invention relates to a method for monitoring environmental status, and more particularly, to a distributed monitoring method for monitoring environmental status.

### II. Background Art

A prior art smoke and fire alarm system would comprise a plurality of alarm detectors and a controller. Communication between said controller and field devices is by way of a fieldbus. Usually, this kind of communication uses mainly the following two types of communication protocols.

The alarm signals of the first type of communication protocol are driven by the occurrence of events such as smoke or fire. Based on this type of protocol, when a system is in operation, usually the controller and the alarm detectors are all in activated status. Once one or several of the alarm detectors detect the occurrence of a smoke/fire event, said alarm detector(s) would send an alarm to the controller. The advantage of this type of communication protocol is that every alarm detector is independent and can make an alarm to the central controller at any time; and the disadvantage is that the controller can merely receive reports passively from the alarm detectors and cannot find out the operating status of each detector from time to time. Once one of the alarm detectors fails to operate, it would directly affect the alarm operation in the area covered by that alarm detector, thus putting the whole system in a less reliable operating status.

In the second type of communication protocol, said central controller periodically sends enquiring signals to each field device, and according to the replying signals of a relevant alarm detector it makes judgment on whether said alarm detector has found an abnormal smoke/fire event, and whether there is failure in any of those alarm detectors. The advantage of this type of protocol is that the central controller can monitor the operating status of every alarm detector effectively and quickly, and the disadvantage is that in a relatively large system (such as a system having more than a hundred alarm detectors), the central controller has to have a relatively long period (usually a few dozen seconds or more) to complete a cycle of inspection of all the alarm detectors. Once one of the alarm detectors finds a fire alarm during this period, it can only wait passively for the next visit by the controller in order to send out an alarm. Finding a fire alarm quickly is critically important to the subsequent risk management, the actuation of a fire extinguishing system, the arrangement of human inspection and personnel evacuation. Therefore, in the prior art alarm systems using this type of communication protocol, it is not suitable for them to carry a large number of alarm detectors; otherwise it would have the problem of delayed alarming.

On the other hand, in the prior art systems there are many alarm detectors which are always in the activated status for reporting to the controller at any time, even when they do not have alarm signal to send to the central controller, therefore those alarm detectors and hence the whole system have a high power consumption.

Document US 2005/114577 (A1) discloses the preamble of claim 1.

### III. Contents of the Invention

Accordingly, one object of this invention is to solve the dilemma in the prior art between the alarm detectors' needs to quick response and the long time period required for normal inspection of the alarm detectors.

Another object of this invention is to reduce the power consumption by the whole monitoring system.

According to one aspect of this invention, there is provided a distributed monitoring method, using a controller and at least two field devices, with communication between said controller and each of the field devices being by way of a fieldbus, and the communication signals transmitted thereby being formed by a plurality of signal frames, wherein each signal frame comprises a field device address segment of a field device to which the controller transmits the signal, a field device sub-address segment of said field device to which the controller transmits the signal, a read/write flag segment of said field device to which the controller transmits the signal, a segment for data exchange between the controller and said field device and a reporting request segment which allows any of the field devices to transmit to the controller;
wherein, said method comprises the following steps:
(1) the controller establishes connection with a concerned parameter of a field device to be visited by directing towards a field device address segment and a field device sub-address segment of said field device;
(2) the controller sends out a read or write request to said field device by transmitting a read/write flag segment (R/nW) to said field device;
(3) according to said flag segment (R/nW) for reading or writing data, said controller reads from said field device the parameter data of said sub-address, or writes into said sub-address of said field device new parameter data;
(4) when any of the field devices detects an abnormal event, said field device sends to the controller a reporting request in the reporting request segment of a current or a following signal frame.

The "distributed monitoring method" described in this invention refers to the distribution of field devices within an area manageable by a relevant communication bus. For example, to a current system of a DC power supply, this can be an area within a few kilometers. Generally speaking, in addition to the conditions of power supply, a system's operating area would also be determined by a signal's degree of distortion during its transmission, the capacity to process signals by the field devices and many other elements.

Said controller can be an independent controller. Alternatively, said controller can also be a group of controllers formed by a plurality of separated controllers, with each controller in said controller group responsible for some of the field devices; and then these controllers are integrated together to operate as a controller of more powerful functionality.

Said field devices include smoke sensitive detectors, temperature sensitive detectors, control modules, etc.

Said fieldbus is the communication medium for the devices in the system, and each field device in the system is connected to this communication bus, and communicates with the controller via this communication bus.

Said fieldbus periodically transmits many kinds of signals. One complete signal cycle includes at least one signal frame, and can also include a frame gap or a power supply segment; or it can include both a power supply segment and a frame gap. Each signal cycle can start from this signal frame; and in case that there is a power supply segment, the signal cycle starts from one power supply segment.

Within a signal cycle, the controller makes a visit to a parameter of a field device, said field device makes a response to said visit request, and the controller reads said parameter or renews said parameter; after that, any field device, according to a detected abnormal event, can send a reporting request to the controller; in the next signal cycle, the controller decides, according to whether any abnormal event occurred in the system during the last signal cycle, whether to process the abnormal event or to proceed to a next normal turn of inspection. It is repeated like this, so that the controller and each of the field devices carry out uninterrupted monitoring in its responsible area. In case that there is a power supply period, at the beginning of each signal cycle, the fieldbus carries out charging of all the field devices, then the controller carries out a monitoring operation of each field device. When there is a frame gap in a signal cycle, during said frame gap, all devices keep silent.

Said signal frame is a complete unit of the communication signals, including a number of segments. Each signal frame starts with one field device address segment of a field device to which the controller directs. Each segment in turn includes at least one data bit. In the method of this invention, a data bit is a basic unit of a signal frame and also a signal cycle.

Said one address refers to the distinguishing marking of a field device in the system made by the controller. By designating a suitable address, relevant devices in the system can communicate with the device represented by said address.

The sub-address of one of the field devices indicates a parameter of the field device being located at that address. Said parameters of different types of field devices can be of different kinds. For example, as to a smoke sensitive detector, said parameter can be e.g. a smoke density value, the device's sensitivity, etc. As to a temperature sensitive detector, said parameter can be e.g. a temperature value, the device's sensitivity, etc. As to a control module, said parameter can be e.g. the time of "On" operation, the time of "Off" operation, the repeating time, etc.

Said controller and field device data exchange segment indicates that the controller reads from or writes into said field device the value of the parameter.

On the one hand, the controller can read from each said field device the data at said sub-address, so as to learn the relevant parameter. On the other hand, by writing a certain value into the sub-address of a certain address, the controller can make adjustment to a parameter's threshold value of a relevant field device.

The reporting request segment transmitted by said field device to the controller indicates the data reported to the controller by one of the field devices, including the address data of the field device making the report; and it can further include a certain sub-address data of said field device.

It is an advantageous arrangement to have said field device address segment and field device sub-address segment arranged together. Of course, according to the method of this invention, it is not essential to have said field device address segment, field device sub-address segment, read/write flag segment, controller and field device data exchange segment and reporting request segment in the signal frame arranged in this sequence. For example, the segment for a field device to transmit data to the controller can be arranged as the first segment or the last segment. By setting the read/write flag segment before the controller and field device data exchange segment, the relevant information exchanged between the controller and field device can be processed immediately; of course, within said data transmitting segment it is only necessary to keep said read/write flag segment before the data exchange between the controller and field device.

Said abnormal events include abnormality of the status of field devices, the environment abnormality detected by the field devices (such as smoke and fire events), etc.

Within a signal frame, the controller only communicates with one field device by directing to a specific field device address and sub-address, and performs data reading or writing operation only to one of the parameters (represented by the data of the sub-address) of said field device.

Within one data transmitting part, if none of the field devices issues a reporting request to the controller, in the next signal frame, by designating a specific address and sub-address, the controller will read information from or write information into said address, so as to read another parameter of said field device (or a parameter of a next field device), or to write into said address and sub-address a next parameter of said field device (or a parameter of a next field device).

If none of the field devices has any abnormal event to report, normally these field devices would not issue a communication request to the controller. Under such circumstances, the controller can follow a pre-set program to inspect in turn the field devices under its care (such as all the field devices). After a period of time, the controller would make a complete turn of inspection of the relevant parameters of the relevant field devices. Then, it can start a new turn of inspection to the field devices.

Within one turn of inspection, the controller can scan all of the parameters of all of the field devices, or it can scan only some of the parameters of all of the field devices. Usually, it is necessary for the important parameters to be visited more frequently, while for the less important parameters to be visited less frequently. From the view point of the field devices, certain important field devices (such as temperature sensitive detectors and smoke detectors) can be visited more frequently, and those less important field devices or more reliable devices (such as certain control modules) can be visited less frequently. Furthermore, the visiting scheme for the field devices and those parameters can be set with flexibility according to needs.

According to one aspect of the method of this invention, if at a certain moment of a certain signal frame, a certain field device detects an abnormal event, said field device would send a reporting request to the controller in the reporting request segment of the current signal frame or the next signal frame. The controller would pay attention to that field device, e.g. in the signal frame after the receipt of the report (e.g. in the signal frame immediately after the receipt of the report), and by setting a "read" instruction in this signal frame it can read from that field device the relevant information, namely to read the data at the relevant sub-address of said field device. By reading said information, the controller (and the relevant personnel on duty in the case that there are people on duty) can carry out relevant operation according to the situation reflected by said information.

According to another aspect of this invention, in the above step 4), the field device would send to the controller a priority rating value together with the report. Said priority rating uses a number to indicate an abnormal event, such as smoke and fire alarm, the field device's operating status, etc. The rating of the smoke and fire alarm can be set as the highest, and certain failure status of the field device which does not need to be dealt with immediately can be listed as an ordinary priority rating. The alarm signals with a higher priority rating will be dealt with by the controller with priority. Such a situation may happen, for example, when a certain field device finds an abnormal event. Said reporting request signals include, for example, the field device's address and sub-address, etc. Of course, it is also possible to set the system in a way that: when a certain field device sends out an alarm signal of a highest priority rating, the controller would not read the relevant information in a subsequent signal frame, instead it issues an operating instruction directly to the relevant personnel and/or security and prevention devices.

According to a further aspect of this invention regarding a priority rating value signal, when there are two or more field devices sending out reporting requests to the controller within one signal frame, the controller would, in the subsequent signal frame, deal with the report with higher priority rating first.

Different priority ratings can be indicated by different numbers., for example, a lower value can represent a higher priority rating. This function can be achieved by way of using smaller numbers which represent higher priority ratings to shield larger numbers which represent lower priority ratings. For example, when the priority rating of the fire alarm signal is set as the highest, i.e. a binary number of 000, this number would shield numbers of other priority ratings. How to realize this method is well known to those skilled in the art.

It can be seen from the method of this invention that in one signal frame, the controller only accepts the reporting request from one field device. When the priority ratings of reporting requests from two or more field devices are the same at the same time, and said priority rating is higher than that of any other field devices, the controller can process with priority the reporting request which is received first, leave the other reporting requests of the same priority rating for processing during the subsequent signal frames, and keep the reporting requests of lower priority ratings for processing at signal frames further behind. In fact, the report of a first abnormal event would be able to alarm the controller's personnel on duty for relevant inspection and prosecution, so for the abnormal events reported afterwards, no matter whether their priority ratings are the same as or lower than that of the earlier abnormal event, the slight delay in the reporting time would not significantly affect the personnel on duty to inspect the system's whole responsible area, or to take necessary measures to deal with the situation.

According to a further aspect of this invention, a signal frame can also include at least one synchronization segment signal for realizing synchronization between the controller and all of the field devices, so as to enable the relevant devices in the system to carry out smoothly the next step signal transmission and processing operation. The synchronization can be realized in any way known to those skilled in the art. Said synchronization segment can be set between several segments within one signal frame. When there is no power supply segment (namely the field devices are equipped with battery or equipped with external power supply), said synchronization segment can also be set, for example, at the beginning of a signal frame.

According to another aspect of this invention, at least some of the field devices are in a power-saving operating status within a part of the time period of the data transmission segment.

Whether a field device is power-saving depends on whether said field device is able to shield at least part of the components or part of the functions of said field device for at least a part of the time, while keeping the essential parts of the field device operating to realize necessary functions. In other words, the power-saving of a field device depends on at least part of the components and/or part of the functions of the field device being in a dormant status for at least part of the time, without being in an activated status all the time.

For example, many field devices used in this invention include a communication interface and a periphery circuit. Furthermore, detector type field devices and control module type field devices also include a dedicated central processing unit (CPU) or a dedicated coding-decoding chip functionally equivalent to a CPU, and the detector type field devices further include sensors.

A field device in activated status means that all the components of the field device are in normal operating status. A field device in power-saving status means that only the essential components of the field device (e.g. the sensor component in a smoke sensitive detector) are in normal operating status, while at least one of the other non-essential components (e.g. the communication interface, periphery circuit, CPU or coding/decoding chip) is in a dormant status, so that the overall power consumption of the field device is less than the power consumption of this field device when it is in the activated status.

There are the following respective ways for switching a field device to power-saving status, such as:
(1) Shut down the communication function of all field devices for at least a part of time, and ignore any information sent by the controller to said fieldbus during that time. The field devices rely on their own wakening function to activate themselves regularly and to start the remaining functional modules, such as the detector part, then according to whether there is any abnormal event; they decide to occupy the bus or to wait for the controller's inspection. Under this mode, the length of a field device's dormant period must be acceptable to an application, and during this period the field device would not be wrongly treated by the controller as in failure.
(2) The sensor parts or the input interface parts of the detector-type and module-type field devices are always on; and the communication interface, CPU and its periphery circuit parts are off unless when it is necessary to communicate with the controller, so as to save power. When the sensor or the input interface part of a field device detects an abnormal event, it activates the CPU, and the CPU wakens up the periphery circuit part and the communication interface part, and occupies the bus by a pre-set arbitrating mechanism. Otherwise, even if no abnormal event occurred, the CPU can activate itself by its own wakening component at a fixed time (or not at a fixed time), and report its status to the controller. Under this mode, shutting down a field device's function during this time would not be wrongly considered by the controller as a failure.
(3) All the field devices will be woken up by a timer in the CPU before the field device address segment, and the address bit of the field device designated by the controller will be translated; if that address does not match its own address and said field device does not intend to report to the controller, then at least within a part of the time period for that signal frame, at least a part of that field device shuts down; when a field device detects an abnormal event during this segment, then at least during that segment or a subsequent period of the reporting request segment when the field device is transmitting to the controller, the field device is in the activated status, until it has successfully reported to the controller the relevant abnormal event. To be more illustrative, under this operating mode, a detector carries out its detection in an "impulsive" manner.

According to another aspect of this invention, there is at least one cyclic redundancy check segment in each signal frame for carrying out a cyclic redundancy check during at least one step of the steps (1) to (4). This can be carried out by using any existing cyclic redundancy check method.

According to another aspect of this invention, there is at least one wait bit in each signal frame for making the operation of the devices in the system better synchronized during the steps (1) to (4). Since the controller and many field devices process data by software, by adding the wait bit it helps to realize the synchronization of the devices in the system.

According to another aspect of this invention, when a field device without external power supply is used (namely a passive field device, such as a smoke detector without power supply), at least one power supply segment can be set within a signal period. During said power supply segment, said fieldbus would supply power to at least some of the field devices, so as to ensure that the field devices have sufficient electric power for completing the relevant operation at least during that signal frame. Furthermore, during the power supply segment the power supply can be made to all the field devices. If this segment is not set, the field devices must have an internal battery or connect to an external power cable to ensure their normal operation, and this would increase the costs for the field devices and the running costs of the overall system.

By using this scheme, the field devices in this invention (such as a smoke alarm) can be passive field devices without power lines. In this case, the signal cables would be used both for transmitting signals and as power lines. During each power supply segment, the relevant fieldbus would supply power to field devices. The electricity charged should be sufficient for meeting the needs of the field devices until the next power supply segment.

When a signal frame is relatively long or a relevant field device needs more power, it is possible to set two or more power supply segments in one signal frame, so as to ensure that the relevant field devices have sufficient power to complete the detection and the communication with the controller.

Therefore, said fieldbus is not only used for transmitting communication signals between the controller and the field devices, but also for supplying power signals to the field devices.

### IV. Description of the Drawings

Fig.1 shows an example of the monitoring system used in this invention;
Fig. 2 shows an example of a part of a signal frame in the method of this invention;
Fig. 3 is a functional block diagram of a detector type field device;
Fig. 4 is a functional block diagram of a control module type field device;
Figs. 5 and 6 are respectively illustrating diagrams of several segments of a signal frame in an embodiment of the method of this invention.

### V. Practical Embodiment

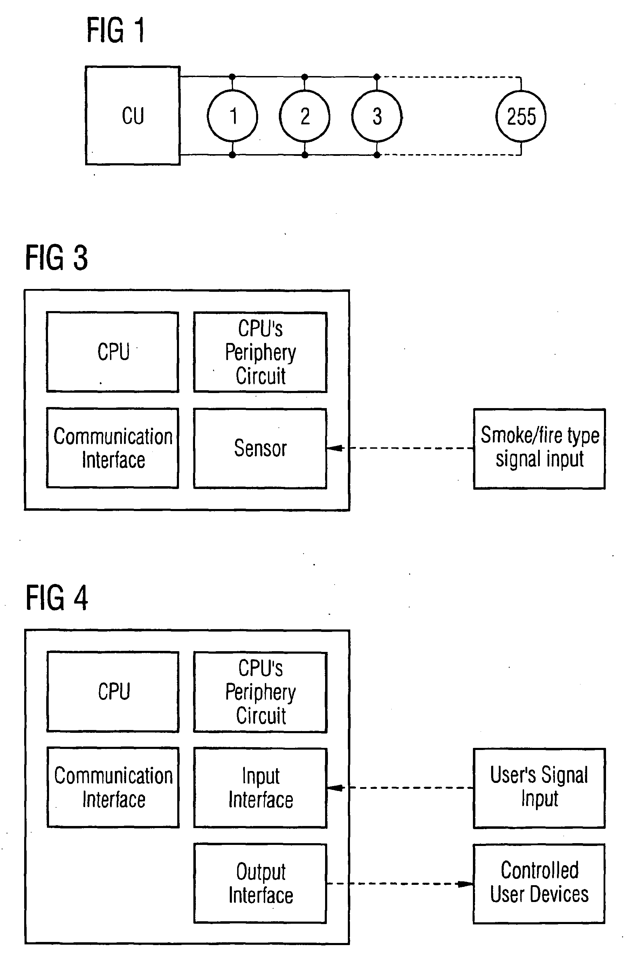

Fig. 1 shows an example of the monitoring system using the method of this invention. As shown in Fig. 1, the monitoring system has one controller and 255 field devices (with numeral reference 1, 2, 3, ..., 255), here all the field devices are a certain model of smoke detector. These field devices are connected in parallel, and form a loop circuit with the controller. Usually, when there is no occurrence of an abnormal event, such as smoke and fire, the controller would visit each field device one by one. In each signal frame, the controller would learn a certain parameter of a field device. If none of the field devices detects an abnormal event, then usually after e.g. 255*n signal frames (n is the number of sub-addresses visited for each field device, which can be adjusted flexibly according to the circumstances), the controller completes a turn of inspection to all the field devices. Then, a next cycle of inspection starts.

Within a certain signal frame, if one of the field devices detects the occurrence of a certain abnormal event, the field device concerned would send to the controller a request during the current signal frame or the next signal frame. The controller would reply to the request in the next (or a subsequent) signal frame, issue instructions to relevant field devices, or read detailed information of the relevant event.

For example, when a certain field device sends to the controller a reporting request of a highest priority rating and this rating only corresponds to the situation of "occurrence of a fire disaster", then it is not necessary for the controller to read the detailed information of this event in the next signal frame, but to directly start the operations of fire extinguishing, personnel evacuation, etc.

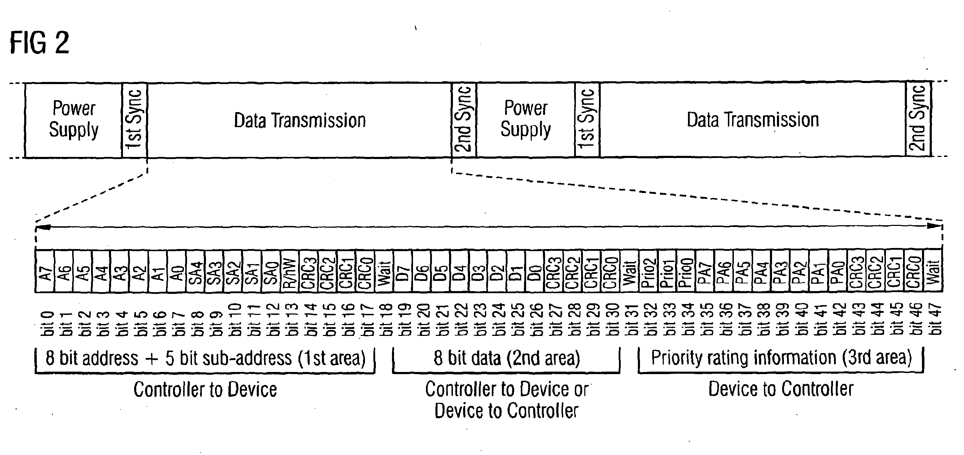

Fig. 2 shows an example of a signal frame and a number of segments in the signal frame in the method of this invention.

The controller sends out, periodically, a series of communication signal frames to all the field devices via the fieldbus, and those field devices can also send reporting requests independently to the controller, then, under the management of the controller, send the report signals to the controller. In the example of Fig. 2, each signal frame includes a first synchronization segment, a data transmitting segment, a second synchronization segment and a power supply segment. In this example, the length of each bit in the signal frame is 3.00 ms.

Said fieldbus supplies power to all the field devices during the power supply segment, so as to ensure the field devices' normal operation. In the signal frame shown, there is behind the power supply segment a first synchronization segment. This first synchronization segment switches the controller and all the field devices in the system to a synchronized status, so as to enable any of the field devices to have normal communication with the controller. After the first synchronization segment there is a data transmitting segment, then a second synchronization segment. This second synchronization segment is the last part of this signal frame. Said data transmitting segment includes a field device address segment (A7 to A0), a field device sub-address segment (SA4 to SA0), a read/write flag segment (R/nW), a cyclic redundancy check segment (CRC3 to CRCO), a wait bit, an exchange data segment (D7 to D0), another cyclic redundancy check segment (CRC3 to CRCO), another wait bit, a report information segment, a third cyclic redundancy check segment (CRC3 to CRC0) and a wait bit. Then, the fieldbus would start again to send the next signal frame to all the field devices, and the same would repeat cyclically so that the relevant system is capable to perform continuous monitoring of the area under its responsibility.

Said exchange data segment indicates the data that the controller reads from said sub-address of said field device, or the data that it writes therein.

Said report information segment includes 3 bits (Prio2 to Prio0) indicating the priority rating of the report information, and 8 address bits (PA7 to PAO) of the field device initiating the report.

As an example of power-saving in the field devices, the CPUs of all the field devices can be kept at an activated status for the first 10 bits (Sync 1, Sync 2, A7 to A0) in the time period including the first synchronization segment, the data transmitting part and the second synchronization segment as shown in Fig. 2. After that, if said field device does not intend to report its own status to the controller, and no alarm signal is detected, then those field devices without communication task are maintained at a low power consumption status.

In this example, the wait bit helps to eliminate the problem of synchronization difficulties caused by the elements such as the field devices' uneven progress, unmatched speeds, etc. during their operation process.

Detailed description is made hereinbelow to the components of the data transmitting part shown in Fig. 2. For the sake of easy description, this part is divided into three areas, namely the first area, the second area and the third area, together with several wait bits in between.

Said first area includes the field device address segment, the field device sub-address segment, the read/write flag segment and a cyclic redundancy check segment. The data of the field device address segment and the field device sub-address segment are transmitted by the controller to the fieldbus. In this example, said field device address segment includes 8 address bits (A7 to A0), which can represent the addresses of 256 devices; said field device sub-address segment includes 5 address bits (SA4 to SA0), which can represent 32 sub-addresses, namely 32 parameters for each field device. The data of the field device sub-address segment can be used to indicate certain characteristic parameters of the field device, such as the number of continuous working hours since the last maintenance, to be provided under the request of the controller, or its manufacturing date, etc. These 5 sub-address bits here enable the system to define 32 sub-addresses for each field device, but this is only the largest possibility given to the system. In any practical embodiment, although it is not necessary to have so many sub-address parameters, nevertheless this definition has provided a great flexibility for improving and upgrading the field devices, so that a skilled person can define the relevant sub-address according to the performance and needs of the relevant field device.

After said field device sub-address segment there is a read/write flag segment (R/nW), which is formed here by one bit. This flag bit is used to indicate whether the controller, in the next step, is to write data into a field device or to read data from a field device. This flag bit can be defined as 0 or 1, indicating respectively that the controller is to have a read-from or write-into operation to the sub-address data of said field device.

In this example, the 4 bits afterwards are the cyclic redundancy check bits (CRC), to be used for checking whether any error occurred during the data transmission. This cyclic redundancy check can be carried out by any method known by those skilled in the art.

Between the above-mentioned first area and the second area to be described below, there is set a wait bit. All field devices need time to process and execute relevant instructions, and those field devices are in different status, therefore this wait bit can be utilized by the field devices for internal adjustments, so as to ensure the field device designated by the controller can have normal communication with the controller afterwards.

It is also possible to set more than two wait bits according to the situation of the CPU's processing capability in the field devices. Generally, if said CPU has relatively poor processing capability, more wait bits can be set to provide buffer to this status.

Said second area includes 8 data bits and immediately afterwards 4 cyclic redundancy check bits. Said 8 data bits (D7 to D0) are used to represent the data written into the sub-address of the field device designated by the controller in the first area, or the parameter represented by the sub-address of the field device read by the controller. The meaning and operation method of the 4 cyclic redundancy check bits in this area (CRC) are the same as that described above.

Another wait bit is set between said second area and the third area to be described below, the effect of which is also to achieve better synchronization between the devices in the system.

Said third area is used to represent the information requesting priority treatment (priority rating information) sent to the controller when a certain field device detects an abnormal event, which includes 3 priority rating bits, 8 data bits for a field device to transmit data segments to the controller, and 4 cyclic redundancy check bits. In this embodiment, said third area starts with 3 priority rating bits for indicating the level of importance of the information reported by the field device to the controller. Decimal numbers 0 to 7 can be used to represent different levels of importance of said information. When shown by binary system, these levels can be a number from "000" to "111". ,These 8 priority ratings can be defined respectively, so the lower the number, the higher its priority rating (namely its importance).

Following these three priority rating bits, there are 8 data bits (PA7 to PA0) of the data segment transmitted by said field device to the controller, which are used here to indicate the address bits of a "calling" field device. Said field device (a smoke alarm in this embodiment) transmits these 8 data bits and the above 3 priority rating bits (Prio2 to Prio0) to the controller via the fieldbus, so as to indicate to the controller which one of the field devices is making what kind of call to the controller. In this embodiment, since a default reason for calling is set as finding a smoke/fire event (namely the event with the highest priority rating, or sub-address parameter), therefore there is no need to indicate to the controller which parameter of this field device becomes abnormal. In fact, generally speaking, after the 8 data bits for transmitting the data segment to the controller by said field device, it is possible to further set several (such as 5) data bits, so as to indicate which of the parameters (sub-addresses) of the field device designated here becomes abnormal.

In this embodiment, after the field device has transmitted to the controller the data segment of these 8 data bits, there are 4 cyclic redundancy check bits for checking whether any error occurred in the data transmission before them. Here, methods known to those skilled in the art can be used. Said third area finishes after these 4 cyclic redundancy check bits.

Immediately after the data transmitting segment, there is another wait bit. The effect of this wait bit is also to achieve better synchronization between the devices in the system.

Within said signal frame, if none of the field devices finds any abnormal event, this third area is quiet, namely none of the field devices sends to the controller a reporting request. Then the controller carries on scanning the next signal frame.

Otherwise, if within said signal frame one or more field devices find one or more abnormal events, the field devices concerned would make use of these 8 data bits for transmitting data segments to the controller by said field device to initiate a reporting request. The controller would learn in the following signal frame from the field devices concerned the detailed information about the abnormal events that occurred.

In this embodiment, the data segment transmitted by the field devices to the controller is located in said data transmitting segment at a relative backward position. Generally speaking, the data segment transmitted by a field device to the controller can be located at any position within the data transmitting segment.

Figs. 3 and 4 are respectively functional block diagrams of a detector type field device and a control module type field device. These two examples provide exemplary configurations of the field devices in this invention.

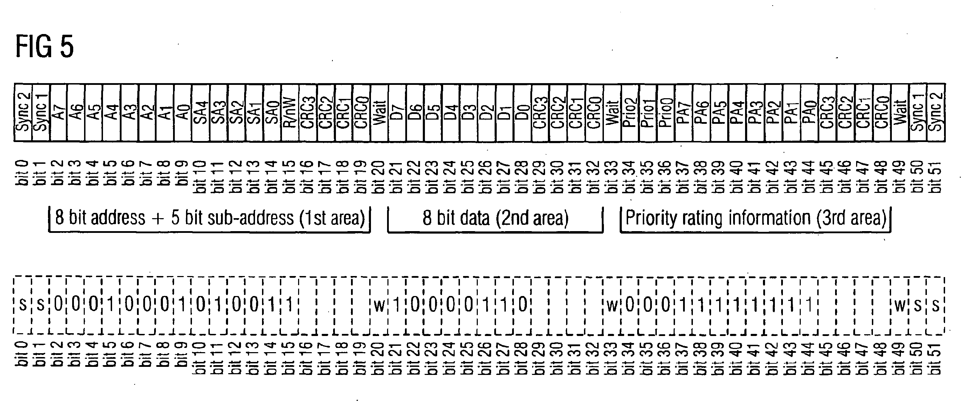

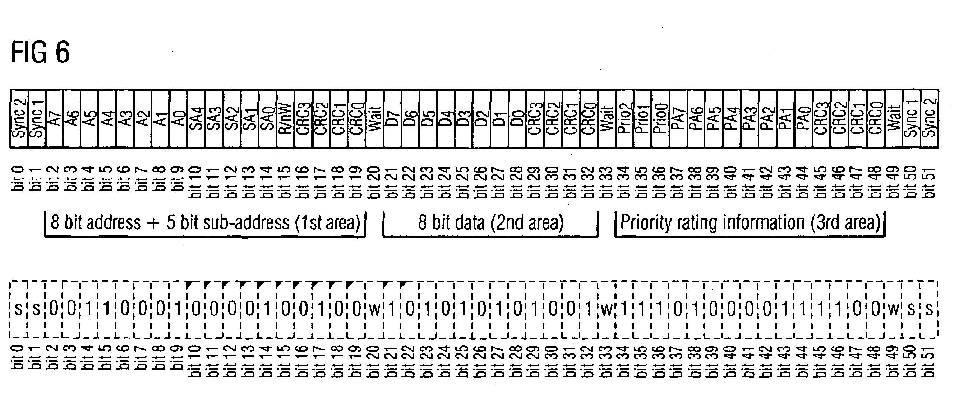

Figs. 5 and 6 are respectively illustrating diagrams of a data transmitting segment and synchronization segments before and after it within a signal frame in an embodiment of the method of this invention.

As shown in Fig. 5, in the data transmitting segment of this embodiment, the controller needs to read the data stored in the sub-address no. 9 of the field device no. 17 on the fieldbus. The data read therefrom is a hexadecimal number of 86(h). In this example, none of the field devices intends to send reporting information to the controller. In this example, none of the devices sends any priority rating information. The table below provides more detailed information of this case.

| | Decimal | Hexadecimal | Binary | Note |
|---|---|---|---|---|
| a. Device address: | 17(d) | 11(h) | 00010001(b) | Device no. 17 |
| b. Device sub-address: | 9(d) | 9(h) | 01001(b) | Sub-address no. 9 |
| c. Read/write flag: | 1(d) | 1(h) | 1(b) | Read cycle |
| CRC code in parts a, b, c: | | | | |
| d. Data: | 134(d) | 86(h) | 10000110(b) | Read data 86(h) |
| CRC code in part d: | | | | |
| e. Event priority: | 0(d) | 0(h) | 000(b) | No priority information |
| f. Event address: | 255(d) | FF(h) | 11111111 (b) | No priority information |
| CRC code in parts e, f: | | | | |
| CRC divisor: | 54(d) | 36(h) | 00110110(b) | Fixed divisor |

As shown in Fig. 6, in the data transmitting segment of this embodiment, the controller needs to write AA(h) into the sub-address no. 1 of the field device no. 49. In this signal frame, the field device no. 67 is to send to the controller within this signal frame an abnormal event report of a highest rating (of a priority rating of decimal number 7). This report will be processed in the following signal frame. The table below provides more detailed information of this case.

| | Decimal | Hexadecimal | Binary | Note |
|---|---|---|---|---|
| a. Device address: | 49(d) | 31(h) | 001100001(b) | Device no. 49 |
| b. Device sub-address: | 1(d) | 1(h) | 00001(b) | Sub-address no. I |
| c. Read/write flag: | 0(d) | 0(h) | 0(b) | Write cycle |
| CRC code in parts a, b, c: | 4(d) | 4(h) | 0100(b) | |
| d. Data: | 170(d) | AA(h) | 10101010(b) | Write data AA(h) |
| CRC code in part d: | 9(d) | 9(h) | 1001(b) | |
| e. Event priority: | 7(d) | 7(h) | 111(b) | Highest priority rating |
| f. Event address: | 67(d) | 43(h) | 01000011(b) | Data requested by device |
| CRC code in parts e, f: | 12(d) | C(h) | 1100(b) | |
| CRC divisor: | 54(d) | 36(h) | 00110110(b) | Fixed divisor |

The method of this invention not only retains the advantage of the fieldbus type with the controller to inspect the field devices periodically, but also retains the advantage of the event-driven type of fieldbus, therefore it has significant advantages over the above-mentioned prior art.

The above example shows that the monitoring method of this invention can be used in a security system and a fire prevention system. In fact, the method of this invention also can be widely used in places like transformer stations, base stations for mobile communication and for the internal management in many kinds of facilities.

## Claims

1. A distributed monitoring method, using a controller and at least two field devices, with communication between said controller and each of the field devices being by way of a fieldbus, and the communication signals transmitted thereby being formed by a plurality of signal frames, wherein each signal frame comprises a field device address segment of a field device to which the controller transmits the signal, a field device sub-address segment of said field device to which the controller transmits the signal where said sub-address identifies a parameter of the field device being located at that address, a read/write flag segment of said field device to which the controller transmits the signal, a data exchange segment between the controller and said field device, and a reporting request segment which allows any of the field devices to transmit to the controller;
wherein, said method comprises the following steps:
(1) the controller establishes connection with a concerned parameter of a field device to be monitored by directing a signal towards a field device address segment and a field device sub-address segment corresponding to said concerned parameter of said field device;
(2) the controller sends out a read or write request to said field device by transmitting a read/write flag segment (R/nW) to said field device;
(3) according to said flag segment (R/nW) for reading or writing data, said controller reads from said field device the parameter data corresponding to said sub-address, or writes into said sub-address of said field device new parameter data;
**characterised in that**:
(4) when any of the field devices detects an abnormal event, said field device sends to the controller a reporting request in the reporting request segment of a current or a following signal frame.

2. The method of claim 1, wherein in the above step (4), said field device sends to the controller a reporting request segment including a priority rating value.

3. The method of claim 1, wherein said signal frame further includes at least one synchronization segment signal, to be used to realize synchronization between the controller and all of the field devices, so as to enable the relevant devices in the system to carry out smooth operation for next step signal transmission and processing.

4. The method of claim 2, wherein said signal frame further includes at least one synchronization segment signal, to be used to realize synchronization between the controller and all of the field devices, so as to enable the relevant devices in the system to carry out smooth operation for next step signal transmission and processing.

5. The method of any of claims 1 to 4, wherein in each signal frame there is at least one cyclic redundancy check segment, to be used for carrying out cyclic redundancy checks in at least one of steps (1) to (4).

6. The method of any of claims 1 to 4, wherein in each signal frame there is at least one wait bit, to be used for making the operation of the devices in the system better synchronized between said steps (1) to (4).

7. The method of claim 5, wherein in each signal frame there is at least one wait bit, to be used for making the operation of the devices in the system better synchronized between said steps (1) to (4).

8. The method of claim 1, 2, 3, 4 or 7, wherein the communication function of all the field devices is turned off for a part of time, during which time all the field devices ignore any information transmitted by the controller via the fieldbus; and the field devices rely on their own wakening components to activate themselves periodically and to turn on relevant modules, and then according to whether there is any abnormal event decide whether to send a report to the controller or to go on waiting for the controller's inspection.

9. The method of claim 1, 2, 3, 4 or 7, wherein a sensor part or an input interface part of every field device is turned on all the time; except when it is necessary to communicate with the controller, a communication interface, a CPU and its periphery circuit part are turned off; when the sensor part or the input interface part of a field device detects an abnormal event or needs to report to the controller its own status, it activates its CPU, and the CPU wakens the periphery circuit part and the communication interface part, so as to send a report to the controller.

10. The method of claim 1, 2, 3, 4 or 7, wherein all the field devices are woken up by a timer of their CPUs before the field device address segment, and translate the address bits of the field device designated by the controller; if this address does not match its own address and the field device does not intend to report to the controller, then at least during a part of the time period of this signal frame, at least a part of that field device is turned off; and when a field device detects during this time period an abnormal event, then this field device is in an activated status during the current segment and a following segment for the field device to send to the controller a reporting request segment, until it has successfully reported to the controller the relevant abnormal event.

11. The method of claim 1, 2, 3, 4 or 7, wherein when field devices without external power supply are used, each said signal frame includes at least one power supply segment, and during said power supply segment said fieldbus supplies power to at least some of the field devices.

12. The method of claim 5, wherein when field devices without external power supply are used, each said signal frame includes at least one power supply segment, and during said power supply segment said fieldbus supplies power to at least some of the field devices.

13. The method of claim 6, wherein when field devices without external power supply are used, each said signal frame includes at least one power supply segment, and during said power supply segment said fieldbus supplies power to at least some of the field devices.

## Patentansprüche

1. Verfahren zur verteilten Überwachung, das einen Controller und mindestens zwei Feldgeräte benutzt, wobei die Kommunikation zwischen dem Controller und jedem Feldgerät über einen Feldbus erfolgt und die so übertragenen Kommunikationssignale von mehreren Signalrahmen gebildet werden, wobei jeder Signalrahmen Folgendes umfasst: ein Feldgerätadresssegment für ein Feldgerät, zu welchem der Controller das Signal überträgt, ein Feldgerätunteradresssegment für das Feldgerät, zu welchem der Controller das Signal überträgt, wobei die Unteradresse einen Parameter des Feldgerätes an dieser Adresse bezeichnet, ein Lese/Schreib-Flagsegment des Feldgerätes, zu welchem der Controller das Signal überträgt, ein Segment für den Datenaustausch zwischen dem Controller und dem Feldgerät und ein Berichtanforderungssegment, das es den Feldgeräten ermöglicht, zum Controller zu übertragen,
wobei das Verfahren folgende Schritte umfasst:
(1) der Controller stellt eine Verbindung zu einem betreffenden Parameter eines zu überwachenden Feldgerätes her, indem er entsprechend dem jeweiligen Parameter des Feldgeräts ein Signal zu einem Feldgerätadresssegment und einem Feldgerätunteradresssegment leitet,
(2) der Controller sendet eine Lese- oder Schreibanforderung an das Feldgerät, indem er ein Lese/Schreib-Flagsegment (R/nW) zum Feldgerät überträgt,
(3) der Controller liest entsprechend dem Flagsegment (R/nW) zum Lesen oder Schreiben von Daten, die der Unteradresse entsprechenden Parameterdaten aus dem Feldgerät oder schreibt neue Parameterdaten in die Unteradresse des Feldgerätes,
**dadurch gekennzeichnet, dass**:
(4) wenn eines der Feldgeräte ein ungewöhnliches Ereignis erfasst, dieses Feldgerät dem Controller in dem Berichtanforderungssegment eines aktuellen oder nachfolgenden Signalrahmens eine Berichtanforderung sendet.

2. Verfahren nach Anspruch 1, bei dem das Feldgerät dem Controller im oben genannten Schritt (4) ein Berichtanforderungssegment sendet, das einen Prioritätseinstufungswert enthält.

3. Verfahren nach Anspruch 1, bei dem der Signalrahmen des Weiteren mindestens ein Synchronisationssegmentsignal enthält, welches für die Synchronisierung zwischen dem Controller und allen Feldgeräten verwendet werden soll, damit die relevanten Geräte im System bei der Signalübertragung und -verarbeitung im nächsten Schritt reibungslos funktionieren können.

4. Verfahren nach Anspruch 2, bei dem der Signalrahmen des Weiteren mindestens ein Synchronisationssegmentsignal enthält, welches für die Synchronisierung zwischen dem Controller und allen Feldgeräten verwendet werden soll, damit die relevanten Geräte im System bei der Signalübertragung und -verarbeitung im nächsten Schritt reibungslos funktionieren können.

5. Verfahren nach einem der Ansprüche 1 bis 4, bei dem sich in jedem Signalrahmen mindestens ein CRC-Segment (CRC = Cyclic Redundancy Check - zyklische Blockprüfung) befindet, welches für zyklische Blockprüfungen in mindestens einem der Schritte (1) bis (4) benutzt werden soll.

6. Verfahren nach einem der Ansprüche 1 bis 4, bei dem sich in jedem Signalrahmen mindestens ein Wartebit befindet, das für die bessere Synchronisierung des Betriebs der Geräte im System zwischen den Schritten (1) bis (4) verwendet werden soll.

7. Verfahren nach Anspruch 5, bei dem sich in jedem Signalrahmen mindestens ein Wartebit befindet, das für die bessere Synchronisierung des Betriebs der Geräte im System zwischen den Schritten (1) bis (4) verwendet werden soll.

8. Verfahren nach Anspruch 1, 2, 3, 4 oder 7, bei dem die Kommunikationsfunktion aller Feldgeräte für einen Teil der Zeit ausgeschaltet ist, in dem alle Feldgeräte sämtliche Informationen ignorieren, die vom Controller über den Feldbus übertragen werden, und die Feldgeräte darauf angewiesen sind, dass sich ihre eigenen Weckkomponenten periodisch selbst aktivieren und relevante Module einschalten, und dann, wenn ein ungewöhnliches Ereignis vorliegen sollte, entscheiden, ob sie einen Bericht an den Controller senden oder weiter auf die Überprüfung durch den Controller warten.

9. Verfahren nach Anspruch 1, 2, 3, 4 oder 7, bei dem ein Sensorteil oder ein Eingabeschnittstellenteil jedes Feldgerätes ständig eingeschaltet ist, eine Kommunikationsschnittstelle, eine Zentraleinheit (CPU) und ihr Peripherieschaltungsteil ausgeschaltet sind, außer wenn mit dem Controller kommuniziert werden muss, und wenn der Sensorteil oder der Eingabeschnittstellenteil eines Feldgerätes ein ungewöhnliches Ereignis erfasst oder seinen eigenen Zustand an den Controller melden muss, aktiviert er seine CPU, und die CPU weckt den Peripherieschaltungsteil und den Kommunikationsschnittstellenteil, damit ein Bericht zum Controller gesendet wird.

10. Verfahren nach Anspruch 1, 2, 3, 4 oder 7, bei dem alle Feldgeräte von einem Timer ihrer CPUs vor dem Feldgerätadresssegment geweckt werden und die Adressbits des vom Controller genannten Feldgerätes übersetzen, zumindest ein Teil dieses Feldgerätes zumindest für einen Teil der Dauer dieses Signalrahmens ausgeschaltet ist, wenn diese Adresse nicht mit der eigenen Adresse übereinstimmt und das Feldgerät keinen Bericht an den Controller senden will, und sich ein Feldgerät, wenn es im Verlauf dieses Zeitraums ein ungewöhnliches Ereignis erfasst, im aktuellen Segment und einem nachfolgenden Segment in einem aktivierten Zustand befindet und ein Berichtanforderungssegment an den Controller sendet, bis es diesem erfolgreich von dem relevanten ungewöhnlichen Ereignis berichten konnte.

11. Verfahren nach Anspruch 1, 2, 3, 4 oder 7, bei dem bei Verwendung von Feldgeräten ohne externe Stromversorgung jeder Signalrahmen mindestens ein Stromversorgungssegment enthält und der Feldbus für die Dauer des Stromversorgungssegments zumindest einige Feldgeräte mit Strom versorgt.

12. Verfahren nach Anspruch 5, bei dem bei Verwendung von Feldgeräten ohne externe Stromversorgung jeder Signalrahmen mindestens ein Stromversorgungssegment enthält und der Feldbus für die Dauer des Stromversorgungssegments zumindest einige Feldgeräte mit Strom versorgt.

13. Verfahren nach Anspruch 6, bei dem bei Verwendung von Feldgeräten ohne externe Stromversorgung jeder Signalrahmen mindestens ein Stromversorgungssegment enthält und der Feldbus für die Dauer des Stromversorgungssegments zumindest einige Feldgeräte mit Strom versorgt.

## Revendications

1. Procédé de surveillance distribuée, utilisant un contrôleur et au moins deux dispositifs de terrain, avec la communication entre ledit contrôleur et chacun des dispositifs de terrain se faisant au moyen d'un bus de terrain, et les signaux de communication transmis par celui-ci étant formés par une pluralité de trames de signaux, dans lequel chaque trame de signal comprend un segment d'adresse de dispositif de terrain d'un dispositif de terrain auquel le contrôleur transmet le signal, un segment de sous-adresse de dispositif de terrain dudit dispositif de terrain auquel le contrôleur transmet le signal, où ladite sous-adresse identifie un paramètre du dispositif de terrain étant situé à cette adresse, un segment de drapeau de lecture/écriture dudit dispositif de terrain auquel le contrôleur transmet le signal, un segment d'échange de données entre le contrôleur et ledit dispositif de terrain, et un segment de demande de rapport qui permet à un quelconque des dispositifs de terrain de transmettre vers le contrôleur ;
dans lequel, ledit procédé comprend les étapes suivantes :
(1) le contrôleur établit une connexion avec un paramètre concerné d'un dispositif de terrain devant être surveillé en dirigeant un signal vers un segment d'adresse de dispositif de terrain et un segment de sous-adresse de dispositif de terrain correspondant audit paramètre concerné dudit dispositif de terrain ;
(2) le contrôleur envoie une demande de lecture ou d'écriture audit dispositif de terrain en transmettant un segment de drapeau de lecture/écriture (R/nW) audit dispositif de terrain ;
(3) en fonction dudit segment de drapeau (R/nW) pour lire ou écrire des données, ledit contrôleur lit à partir dudit dispositif de terrain les données de paramètre correspondant à ladite sous-adresse, ou écrit dans ladite sous-adresse dudit dispositif de terrain des nouvelles données de paramètre ;
**caractérisé en ce que** :
(4) lorsque l'un quelconque des dispositifs de terrain détecte un événement anormal, ledit dispositif de terrain envoie au contrôleur une demande de rapport dans le segment de demande de rapport d'une trame de signal courante ou suivante.

2. Procédé selon la revendication 1, dans lequel, à l'étape (4) ci-dessus, ledit dispositif de terrain envoie au contrôleur un segment de demande de rapport incluant une valeur de classement de priorité.

3. Procédé selon la revendication 1, dans lequel ladite trame de signal inclut en outre au moins un signal de segment de synchronisation, destiné à être utilisé pour réaliser une synchronisation entre le contrôleur et tous les dispositifs de terrain, de façon à permettre aux dispositifs pertinents dans le système d'exécuter une opération normale pour la transmission et le traitement de signaux d'étape suivante.

4. Procédé selon la revendication 2, dans lequel ladite trame de signal inclut en outre au moins un signal de segment de synchronisation, destiné à être utilisé pour réaliser une synchronisation entre le contrôleur et tous les dispositifs de terrain, de façon à permettre aux dispositifs pertinents dans le système d'exécuter une opération normale pour la transmission et le traitement de signaux d'étape suivante.

5. Procédé selon l'une quelconque des revendications 1 à 4, dans lequel, dans chaque trame de signal, il y a au moins un segment de contrôle de redondance cyclique, destiné à être utilisé pour exécuter des contrôles de redondance cyclique à au moins l'une des étapes (1) à (4).

6. Procédé selon l'une quelconque des revendications 1 à 4, dans lequel, dans chaque trame de signal, il y a au moins un bit d'attente, destiné à être utilisé pour rendre le fonctionnement des dispositifs dans le système mieux synchronisé entre lesdites étapes (1) à (4).

7. Procédé selon la revendication 5, dans lequel, dans chaque trame de signal, il y a au moins un bit d'attente, destiné à être utilisé pour rendre le fonctionnement des dispositifs dans le système mieux synchronisé entre lesdites étapes (1) à (4).

8. Procédé selon la revendication 1, 2, 3, 4 ou 7, dans lequel la fonction de communication de tous les dispositifs de terrain est coupée pendant une partie du temps, temps pendant lequel tous les dispositifs de terrain ignorent une information quelconque transmise par le contrôleur par l'intermédiaire du bus de terrain ; et les dispositifs de terrain se reposent sur leurs propres composants de réveil pour s'activer périodiquement et pour mettre en service les modules pertinents, et ensuite selon qu'il y a ou non un quelconque événement anormal, décident soit d'envoyer un rapport au contrôleur, soit de continuer à attendre l'inspection du contrôleur.

9. Procédé selon la revendication 1, 2, 3, 4 ou 7, dans lequel une partie de capteur ou une partie d'interface d'entrée de chaque dispositif de terrain est en service à tous moments ; sauf lorsqu'il est nécessaire de communiquer avec le contrôleur, une interface de communication, une UC et sa partie de circuit de périphérie sont hors service ; lorsque la partie de capteur ou la partie d'interface d'entrée d'un dispositif de terrain détecte un événement anormal ou doit envoyer au contrôleur un rapport sur son propre statut, il active son UC, et l'UC réveille la partie de circuit de périphérie et la partie d'interface de communication, de façon à envoyer un rapport au contrôleur.

10. Procédé selon la revendication 1, 2, 3, 4 ou 7, dans lequel tous les dispositifs de terrain sont réveillés par un minuteur de leur UC avant le segment d'adresse de dispositif de terrain, et traduisent les bits d'adresse du dispositif de terrain désigné par le contrôleur ; si cette adresse ne correspond pas à sa propre adresse et si le dispositif de terrain ne désire pas envoyer un rapport au contrôleur, alors au moins pendant une partie de la période de temps de cette trame de signal, au moins une partie de ce dispositif de terrain est mise hors service ; et lorsqu'un dispositif de terrain détecte pendant cette période de temps un événement anormal, alors ce dispositif de terrain est dans un état activé pendant le segment courant et un segment suivant pour que le dispositif de terrain envoie au contrôleur un segment de demande de rapport, jusqu'à ce qu'il ait rapporté avec succès au contrôleur l'événement anormal pertinent.

11. Procédé selon la revendication 1, 2, 3, 4 ou 7, dans lequel, lorsque des dispositifs de terrain sans alimentation externe sont utilisés, chaque dite trame de signal inclut au moins un segment d'alimentation, et pendant ledit segment d'alimentation, ledit bus de terrain alimente au moins certains des dispositifs de terrain.

12. Procédé selon la revendication 5, dans lequel, lorsque des dispositifs de terrain sans alimentation externe sont utilisés, chaque dite trame de signal inclut au moins un segment d'alimentation, et pendant ledit segment d'alimentation, ledit bus de terrain alimente au moins certains des dispositifs de terrain.

13. Procédé selon la revendication 6, dans lequel, lorsque des dispositifs de terrain sans alimentation externe sont utilisés, chaque dite trame de signal inclut au moins un segment d'alimentation, et pendant ledit segment d'alimentation, ledit bus de terrain alimente au moins certains des dispositifs de terrain.
